# NEUE EUROPÄISCHE PATENTSCHRIFT

(11) **EP 1 373 749 B2**
(45) Veröffentlichungstag und Bekanntmachung des Hinweises auf die Entscheidung über den Einspruch: **02.10.2013**
(45) Hinweis auf die Patenterteilung: 05.11.2008
(21) Anmeldenummer: 02722248.8
(22) Anmeldetag: 20.03.2002
(51) Int. Cl.: F16D 23/14

(54) **SELBSTEINSTELLENDES KUPPLUNGSAUSRÜCKLAGER**
SELF-ADJUSTING CLUTCH-RELEASE BEARING
BUTEE DE DEBRAYAGE A AJUSTEMENT AUTOMATIQUE

(30) Priorität: 24.03.2001 DE 10114846
(43) Veröffentlichungstag der Anmeldung: 02.01.2004
(73) Patentinhaber: Schaeffler Technologies AG & Co. KG, 91074 Herzogenaurach (DE)
(72) Erfinder: DITTMER, Steffen, 91074 Herzogenaurach (DE); WINKELMANN, Ludwig, 91056 Erlangen (DE); KLÖPFER, Bernhard, 91438 Bad Windsheim (DE)
(86) Internationale Anmeldenummer: PCT/EP2002/003054
(87) Internationale Veröffentlichungsnummer: WO 2002/077481

(56) Entgegenhaltungen:
- DE-A- 2 240 383
- DE-A- 19 912 431
- US-A- 4 305 492

## Beschreibung

### Gebiet der Erfindung

Die vorliegende Erfindung bezieht sich auf ein Ausrücklager, das vorzugsweise für eine in Kraftfahrzeugen eingesetzte Schalttrennkupplung vorgesehen ist. Das als Schrägschulterlager gestaltete Lager ist mit einem drehstarr angeordneten Außenring und einem umlaufenden Innenring versehen. Zwischen den Lagerringen sind Wälzkörper in einem Wälzkörperkäfig geführt. Dem Innenring des Ausrücklagers ist ein Einstellring zugeordnet , der eine Verbindung zwischen einer Tellerfeder der Schalttrennkupplung und dem Ausrücklager darstellt. Der Einstellring ist so gestaltet, dass die Bauteile Einstellring und Innenring gegeneinander schwenkbar sind. Damit ermöglicht dieser Aufbau ein selbsteinstellendes bzw. selbstjustierendes Ausrücklager.

Ein derartiges Ausrücklager kompensiert einen sogenannten Axialschlag der unmittelbar mit der Schalttrennkupplung verbundenen Tellerfeder. Der fertigungsbedingte, von der Kupplungstellerfeder verursachte Axialschlag erhöht den Verschleiß und reduziert die Lebensdauer des Ausrücklagers und verursacht das sogenannte Kupplungsrupfen, was den Fahrkomfort wesentlich beeinträchtigt.

### Hintergrund der Erfindung

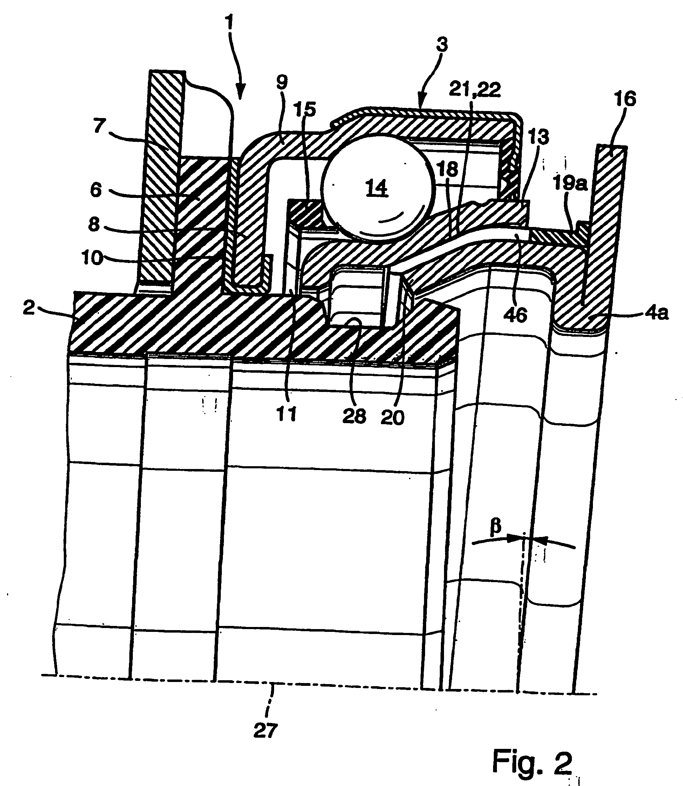

Die DE 72 45 141 U offenbart ein Ausrücklager, bei dem zwischen der Tellerfeder bzw. den Federzungen der Schalttrennkupplung und dem Innenring des Ausrücklagers ein Einstellring angeordnet ist. Die Kontaktzone zwischen dem Einstellring und dem Innenring ist dabei komplementär kugelförmig gestaltet, wodurch sich die unmittelbar abstützenden Bauteile gegeneinander verschieben bzw. ausrichten können. Gemäß Figur 2 sind der Innenring und der Einstellring als spangebend hergestellte, massive Bauteile gestaltet, die einen relativ großen Einbauraum benötigen und hohe Herstellkosten verursachen.

Die DE 199 12 432 A1 offenbart in Figur 3 ein selbstjustierendes Ausrücklager mit einem umlaufenden Innenring. Zwischen der Tellerfeder bzw. deren Federzungen der Schalttrennkupplung und dem Innenring, ist ein Einstellring vorgesehen, wobei der Innenring gemeinsam mit dem Einstellring über komplementär gestaltete Kugelkalottensegmente abgestützt ist Sowohl die Lagerringe des Ausrücklagers als auch der Einstellring sind spanlos durch ein Tiefziehverfahren hergestellt. Beiden Dokumenten, die sich auf ein selbstjustierendes Ausrücklager beziehen, ist gemeinsam, dass der Einstellring und der Innenring aus gleichen Werkstoffen hergestellt sind. Diese Maßnahme begünstigt eine nachteilige Reibrostbildung, verbunden mit einem erhöhten Verschleiß. Die von Fahrzeugherstellem geforderte Lebensdauer für Ausrücklager ist damit nicht realisierbar.

### Zusammenfassung der Erfindung

Von den Nachteilen der bekannten selbstjustierenden Ausrücklager ausgehend, ist es Aufgabe der Erfindung, ein Ausrücklager zu schaffen, welches über die geforderte Lebensdauer die von der Schalttrennkupplung ausgelösten und übertragenen Axialschläge wirksam dämpft bzw. kompensiert, das Kupplungsrupfen vermeidet, eine geräuschoptimierte Selbsteinstellung ermöglicht und wartungsfrei und kostengünstig herstellbar ist.

Die zuvor genannte Problemstellung wird gemäss der Erfindung durch ein Gleitelement gelöst, welches in der Kontaktzone bzw. einem Abstützbereich zwischen dem Einstellring und dem umlaufenden Innenring des Ausrücklagers eingesetzt ist, wodurch zur Erzielung eines selbstjustierenden Ausrücklagers die Bauteile Einstellring und Innenring gegeneinander schwenkbar sind, und wobei an dem Innenring oder auf die Aufnahme des Einstellrings das Gleitelement als Belag aufgespritzt ist und der Innenring bzw. die Ausnahme des Einstellrings eine umlaufende Nut oder Falte aufweist, die mit dem Material des Gleitelements aufgefüllt ist. Diese Maßnahme verbessert entscheidend die Selbsteinstellung der Bauteile Innenring und Einstellring aufgrund reduzierter Reibung, wodurch ein nachteiliges Kupplungsrupfen wirksam vermieden wird. Die optimierte Selbstjustierung dämpft weiterhin entscheidend die aufgrund der Axialschwingungen der Brennkraftmaschine über die Schalttrennkupplung in das Ausrücklager eingeleiteten sowie von der Tellerfeder bzw. deren Tellerfederzungen ausgelösten Axialschläge. Das erfindungsgemäße Gleitelement ist aus einem Lagerwerkstoff bzw. einem geeigneten reibungsmindernden und verschleißfesten Werkstoff hergestellt, der wartungsfrei eine hohe Lebensdauer gewährleistet. Durch die Erfindung wird eine nachteilige unmittelbare Abstützung der aus Stahl hergestellten Bauteile Einstellring und Innenring vermieden. Diese durch das Gleitelement bedingte Entkopplung führt zu einer geräuschoptimierten Abstützung dieser Bauteile und verhindert damit eine Reibrostbildung, sowie ein Kupplungsrupfen und eine Geräuschentwicklung. Das erfindungsgemäße Gleitelement ist so gestaltet, dass dieses ohne Anpassung der Bauteile, an denen das Gleitelement anliegt, eingesetzt bzw. befestigt werden kann und damit innerhalb des vorhandenen Einbauraums liegt.

Der Verschleiß an den sphärischen Kontaktzonen des Gleitelementes durch den Innenring und den Einstellring reduziert sich im Vergleich zu bisherigen selbsteinstellenden Ausrücklagern entscheidend. Das erfindungsgemäße Gleitelement ist kostengünstig in großen Stückzahlen herstellbar. Außerdem erfordert das erfindungsgemäße Gleitelement keine spezielle Handhabe für die Montage bzw. Befestigung an dem Innenring des Ausrücklagers bzw. dessen zugeordneten Einstellring. Für die Befestigung des Gleitelementes eignen sich alle bekannten, üblichen kraft- und/oder formschlüssigen Maßnahmen.

Das erfindungsgemäße Gleitelement trennt in vorteilhafter Weise im Betriebszustand den Innenring des Ausrücklagers von dem Einstellring und ermöglicht damit eine wartungsfreie Selbsteinstellung zwischen dem Innenring und dem Einstellring. Die reibungsarme und zugleich dämpfende Selbsteinstellung erfolgt verschleißarm und kann gemeinsam mit einer Selbstjustierung in radialer Richtung erfolgen.

Weitere vorteilhafte Ausgestaltungen der Erfindung sind Gegenstand der abhängigen Ansprüche 2 bis 18.

Gemäß einer bevorzugten Ausgestaltung der Erfindung ist das Gleitelement dem Einstellring zugeordnet. Zur Erzielung einer möglichst großen Anlagefläche umschließt das Gleitelement die gesamte zum inneren Lagerring des Ausrücklagers gerichtete Seite des Einstellrings. Diese Maßnahme gewährleistet auch in extremen Schwenkpositionen einen unmittelbaren Kontakt zwischen dem Innenring und dem Einstellring. Die großflächige Abstützung des Gleitelementes verbessert außerdem die Befestigung des Gleitelementes an dem Einstellring.

Alternativ schließt die Erfindung ebenfalls ein an dem Innenring des Ausrücklagers befestigtes Gleitelement ein, welches ebenfalls großflächig an der zum Einstellring gerichteten Seite des inneren Lagerrings befestigt ist.

Die großflächige Anlage des Gleitelementes an dem Einstellring oder dem Innenring sichert in jeder Position, d. h. auch bei einer extrem verkippten Lage des Einstellrings eine ausreichende Abstützung. Gleichzeitig gewährleistet die großflächige Anlage des Gleitelementes eine die Festigkeit und Steifigkeit des Gleitelementes beeinflussende verringerte Flächenpressung.

Die Ausgestaltung der Erfindung sieht vor, das Gleitelement als ein Belag unmittelbar auf den Einstellring oder den Innenring aufzuspritzen. Diese Maßnahme bietet den Vorteil, dass Durchmessertoleranzen der zu paarenden Bauteile, Innenring und Einstellring, die beispielsweise Einfluss auf die Baulänge nehmen, entfallen. Für ein derartiges Gleitelement bietet es sich an, in die Trägerfläche eine umlaufende Falte oder Nut einzubringen, die beim Spritzgießen vom Material des Gleitelementes ausgefüllt, eine wirksame Fixierung des Gleitelementes bewirkt. Auf eine zusätzliche separate Sicherung des Gleitelementes kann damit verzichtet werden.

Die bei dem Spritzgießen auftretenden Schrumpfspannungen werden erfindungsgemäß kontrolliert abgefangen, indem die Trägerfläche des Innenrings oder des Einstellrings mit zumindest einer achsparallelen oder schraubenförmig verlaufenden Kerbnut versehen wird. Als Verdrehsicherung wird vorgeschlagen, der Kerbnut diametral gegenüberliegend zumindest eine Fixiernut vorzusehen, die gleichfalls beim Spritzgießen mit dem Material des Gleitelementes ausgefüllt wird.

Gemäß der Erfindung sind das Gleitelement und der Einstellring bzw. der Innenring aus unterschiedlichen Materialien hergestellt. Der Werkstoff für das Gleitelement wird ausgewählt unter Berücksichtigung optimaler Verschleißund Reibungseigenschaften sowie kostengünstiger Herstellung und Montage an dem Innenring bzw. dem Einstellring. Für das Trägerteil, den Innenring oder den Einstellring, der mit dem Gleitelement eine Einheit bildet, wird als Werkstoff bevorzugt Stahl verwendet. Die konstruktive Gestaltung dieser Ringe ermöglicht dabei eine spanlose Herstellung, insbesondere ein Tiefziehverfahren, mit dem der Einstellring als auch der Innenring auch in hohen Stückzahlen kostengünstig herstellbar sind. Zur Erzielung einer ausreichenden Festigkeit, insbesondere Verschleißfestigkeit, ist der Innenring wie auch der Einstellring zumindest in den Zonen hoher Beanspruchung, wie den Kugelkalottenseg menten, der Wälzkörperlaufbahn oder der Kontaktfläche, an der sich die Tellerfederzungen der Schalttrennkupplung abstützt, wärmebehandeft.

Für das Gleitelement ist bevorzugt ein hochtemperaturfester wie auch verschleißfester Kunststoff vorgesehen, wie Thermoplast oder Duroplast. Weiterhin schließt die Ausrückvorrichtung Gleitelemente aus Duroplast ein, wobei dieser Werkstoff Zusätze aus Kohlefaser, MoS₂-Anteile bzw. Epoxidharze aufweist, die gemeinsam oder teilweise eine inkorporierte Schmierung sicherstellen. Derartige Duroplaste verbessern entscheidend die Gebrauchsdauer des Gleitelementes, ohne dabei nachteilig die Herstellkosten zu erhöhen. Alternativ bietet es sich an, ein Gleitelement aus PPA oder PA46 mit Kohlefasern als Verschleißminderer und PTFE-Anteilen als Reibungsbinder einzusetzen.

Für den Einstellring, welcher vorzugsweise spanlos durch ein Tiefziehverfahren hergestellt wird, bietet es sich an, als Werkstoff den Stahl C80M zu verwenden, der mittels einer anschließenden Warmbehandlung härtbar ist.

Die Erfindung beschränkt sich nicht auf die zuvor genannten Werkstoffkombinationen bzw. Kunststoffe, aus denen das Gleitelement hergestellt werden kann, sondern schließt auch weitere Werkstoffe ein, deren Eigenschaften hinsichtlich der Reibung und des Verschleißverhaltens sowie der Verarbeitbarkeit und Herstellkosten eine Anwendung in dem erfindungsgemäßen Ausrücklager ermöglichen.

Als Maßnahme den Schwenkbereich zwischen dem Einstellring und dem Innenring des Ausrücklagers zu begrenzen, ist gemäß der Erfindung das Gleitelement mit einem Bund versehen, welcher einen Anschlag zwischen den beiden zu verschwenkenden Bauteilen bildet Vorzugsweise ist der Bund einstückig an dem Gleitelement angeformt, wobei dieser im eingebauten Zustand parallel zum Ringflansch des Einstellrings verläuft. In einer Extremlage verhindert der Bund eine Abstützung des Einstellrings an der Außenkontur des Innenrings.

Alternativ zu einem einteiligen Einstellring, bestehend aus einem radial ausgerichteten Ringflansch, an dem einseitig die Tellerfeder der Schalttrennkupplung abgestützt ist und der gegenseitig ein Kugelkalottensegment bildet, welches komplementär zum Innenring ausgebildet ist, schließt die Erfindung einen gebauten Einstellring ein. Dieser umfasst einen vorzugsweise aus Stahl hergestellten, radial ausgerichteten Ringflansch, an dem unmittelbar das beispielsweise aus Kunststoff hergestellte Gleitelement befestigt ist. Vorzugsweise ist dabei das in N-Profiltechnik mit einem axial gezogenen Spritzwerkzeug hergestellte Gleitelement aus einem Duroplast hergestellt, da dieser Werkstoff für eine derartige Gestaltung des Gleitelementes sich durch eine ausreichende Festigkeit und Formstabilität auszeichnet.

Eine vorteilhafte weitere Ausgestaltung der Erfindung sieht eine Verliersicherung vor, mit der nach einer Montage bzw. Komplettierung alle Bauteile des Ausrücklagers zusammengefügt sind. Dazu greift ein Endbereich des Gleitelementes oder eine Aufnahme des Einstellrings in eine Ringnut oder Aussparung des elastischen Gehäuses ein und überdeckt dabei radial eine Außenwandung einer Ringnut in dem Gehäuse. Diese Maßnahme gewährleistet, dass die Gehäuse gemeinsam mit dem Ausrücklager und dem Einstellring vorkomplettiert und unverlierbar zusammengefügt sind.

Eine weitere vorteilhafte Ausgestaltung der Erfindung umfasst eine Dichtung in Form einer Labyrinthdichtung zwischen dem Gleitelement, dem Gehäuse und dem Innenring des Ausrücklagers. Dazu bildet das Gleitelement an dem zur Führungshülse gerichteten Ende einen Vorsprung, der mit einem Wandungsabschnitt der Ringnut und/oder einer der Führungshülse zugeordneten Dichtung einen Labyrinthspalt bildet, zur Erzielung einer verbesserten Abdichtung des Ausrücklagers.

Eine vorteilhafte Auslegung der erfindungsgemäßen Ausrückvorrichtung sieht vor, dass die Kugelkalottensegmente in einem Winkel von ≧ 20° zu einer Symmetrieachse des Ausrücklagers angeordnet ist. Weiterhin bilden die im Bereich der Kontaktfläche abgestützten Bauteile einen Radius von ≧ 25mm.

Die Erfindung schließt weiterhin ein ausschließlich selbsteinstellendes Ausrücklager ein. Dabei ist der Ringboden des drehstarren äußeren Lagerrings axial auf dem drehfest mit dem Gehäuse verbundenen Halteblech geführt. Eine radiale Verlagerung zwischen dem Ausrücklager und dem Gehäuse ist damit unterbunden.

### Kurze Beschreibung der Zeichnungen

Es zeigen:
- Figur 1: in einem Halbschnitt ein Ausrücklager in Verbindung mit einer Ausrückvorrichtung, bei der das Gleitelement, dem Einstellring zugeordnet ist;
- Figur 2: zeigt das Ausrücklager gemäß Figur 1, wobei der Einstellring in einer vom Ausrücklager extremen Kipplage dargestellt ist;
- Figur 3: das Ausrücklager gemäß Figur 1, deren Einstellring in Richtung des Ausrücklagers verkippt ist, wobei das Gleitelement mit einer Schulter versehen ist, die einen Endanschlag bildet;
- Figur 4: einen spanlos als Tiefziehteil gestalteten Einstellring, dem ein durch Spritzgießen hergestelltes Gleitelement zugeordnet ist;

### Detaillierte Beschreibung der Zeichnungen

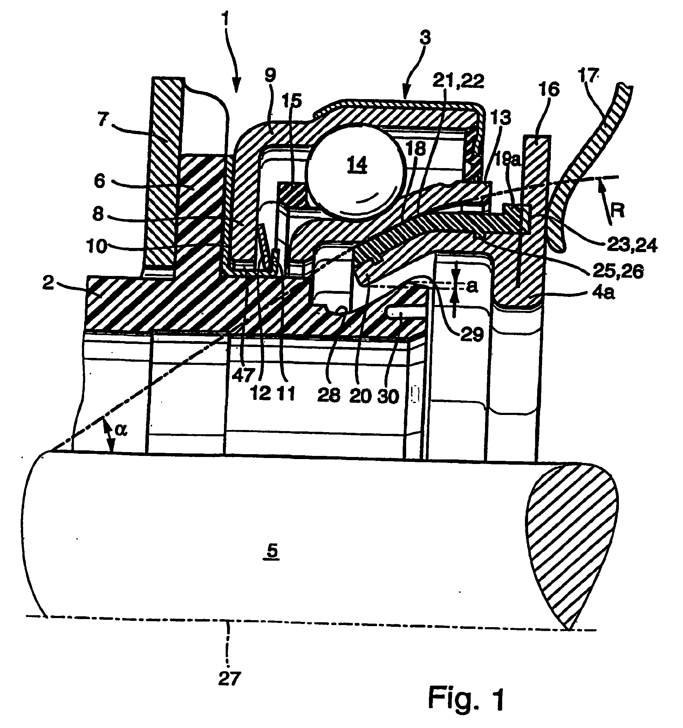

In Figur 1 ist eine Ausrückvorrichtung 1 abgebildet, bestehend aus einem Gehäuse 2, einem Ausrücklager 3 sowie einem Einstellring 4a. Im eingebauten Zustand wird das Gehäuse 2 auf einer Führungshülse geführt, welche eine Antriebswelle 5 umschließt, die eine Brennkraftmaschine mit einem Schaltgetriebe verbindet. An einem Bord 6 des Gehäuses 2 greift auf der einen Seite beispielsweise in Form einer Gabel oder einer Schwinge ein Betätigungsglied 7 an, das über einen Seilzug oder einem Aktor mit dem Kupplungspedal im Fahrgastraum eines Fahrzeugs verbunden ist. An der Gegenseite des Bordes 6 stützt sich mit einem Ringboden 8 ein Außenring 9 des Ausrücklagers 3 ab. Zur Erzielung einer kraftschlüssigen Abstützung des Ringbodens 8 am Bord 6 dient ein die Stirnfläche des Ringbodens 8 abdeckendes Halteblech 10, wobei dessen axialer Abschnitt sich über die Breite des Flansches 8 erstreckt und endseitig eine Bördelung 11 bildet.

Eine kraftschlüssige Abstützung von dem Ringboden 8 an dem Bord 6 des Gehäuses 2 wird mittels einer Tellerfeder 12 erzielt, welche zwischen der Bördelung 11 und dem Ringboden 8 angeordnet ist. Zwischen dem Halteblech 10 und dem Ringboden 8 stellt sich in radialer Richtung ein Ringspalt 47 ein, der eine Selbstjustierung des Ausrücklagers 1 gegenüber dem Gehäuse 1 ermöglicht. Zwischen dem drehstarr angeordneten Außenring 9 und dem umlaufenden Innenring 13 des als Schrägschulterlager ausgebildeten Ausrücklagers 3 sind Wälzkörper 14 in einem Käfig 15 geführt. An der von den Wälzkörpern 14 abgewandten Seite stützt sich an dem Innenring 13 der Einstellring 4a ab, an dessen Ringflansch 16 stirnseitig eine der Schalttrennkupplung zugeordnete Tellerfeder 17 bzw. deren Federzungen kraftschlüssig anliegen. Eine unmittelbare Abstützung der übereinstimmend aus Stahl hergestellten Bauteile, dem Innenring 13 und dem Einstellring 4a in einem Abstützbereich 18 dieser Bauteile wird durch ein Gleitelement 19a vermieden. Zur Erzielung einer selbsttätigen Ausrichtung des Ausrücklagers 3 gegenüber dem Einstellring 4a bilden die unmittelbar abgestützten Bauteile, der Innenring 13 sowie eine Aufnahme 20 des Einstellrings 4a jeweils komplementär angeordnete Kugelkalottensegmente 21, 22. Das am Einstellring 4a lagefixierte Gleitelement 19a erstreckt sich vom Ringflansch 16 über die gesamte Länge der Aufnahme 20 und bildet dabei ebenfalls ein Kugelkalottensegment, d. h. einen konvex gestalteten Abschnitt, der kraftschlüssig an der konkav gestalteten Gegenfläche des Innenrings 13 anliegt.

Das aus einem Lagerworkstoff bzw. einem Gleitlagerwerkstoff hergestellte Gleitelement 19a ist vorzugsweise kraftschlüssig durch eine Klebung an dem Einstellring 4a befestigt. Zur Erzielung einer Verdrehsicherung ist das Gleitelement 19a vorteilhaft mit mehreren umfangsverteilt angeordneten, axial ausgerichteten Nocken 23 versehen, die formschlüssig in entsprechende Ausnehmungen 24 des Ringflansches 16 eingreifen. Alternativ oder zusätzlich ist das Gleitelement 19a im Bereich der Aufnahme 20 mit Fixierzapfen 25 versehen, für die entsprechende Nuten 26 oder Ausnehmungen vorgesehen sind. Der Abstützbereich 18 ist ausgehend zu einer Symmetrieachse 27 der Ausrückvorrichtung 1 unter dem Winkel "α" ausgerichtet. Das Kugelkalottensegment 22 bildet einen Außenradius "R".

Eine wirksame Verliersicherung, die sicherstellt, dass alle Bauteile der Ausrückvonichtung 1, insbesondere alle Bauteile des Ausrücklagers 3 vormontiert, unverlierbar zusammengehalten sind, wird erreicht, indem ein Endabschnitt der Aufnahme 20 des Einstellrings 4a in eine Ringnut 28 des Gehäuses 2 eingreift. Im eingebauten Zustand kommt es dabei zu einer radialen Überdeckung zwischen einer Außenkontur der Wandung 29 und einer Innenkontur der Aufnahme 20, die durch das Maß "a" gekennzeichnet ist. Dabei ist die Wandung 29 mit einer stirnseitigen Kerbnut 30 versehen, wodurch der Außenbereich der Wandung 29 bei der Montage des Einstellrings 4a sich elastisch nach innen verlagert.

In den weiteren Figuren 2 bis 4 sind Ausrückvorrichtungen abgebildet, deren Aufbau weitestgehend mit der Ausrückvorrichtung 1 gemäß Figur 1 übereinstimmt. Gleiche Bauteile sind daher mit den in Figur 1 vergebenden Bezugsziffern versehen. Die nachfolgenden Beschreibungen beziehen sich auf die von Figur 1 abweichenden Bauteile.

Die Figur 2 zeigt die Ausrückvorrichtung 1 in Verbindung mit einem extrem gekippten Einstellrings 4a, wobei die verkippte Lage durch den Winkel "β" gekennzeichnet ist. Zur Reduzierung der Flächenpressung ist die Aufnahme 20 des Einstellrings 4a in Verbindung mit dem Gleitelement 19a soweit nach innen heruntergezogen, dass sich ein möglichst großer Abstützbereich 18 zwischen dem Innenring 13 des Ausrücklagers 3 und dem Gleitelement 19a einstellt. Damit ist auch in einer extrem verkippten Position des Einstellrings 4a eine großflächige und damit ausreichende Abstützung gewährleistet, zur Erzielung einer hohen Steifigkeit zwischen den abgestützten Bauteilen. Das Gleitelement 19a ist auf der zur Aufnahme 20 gerichteten Seite mit Aussparungen 46 bzw. Schlitzen versehen. Diese einseitig oder auch beidseitig des Gleitelementes anzubringenden Aussparungen 46 kompensieren Spannungen aufgrund unterschiedlicher Ausdehnungskoeffizierten zwischen dem Werkstoff des Gleitelementes 19a und dem des Einstellrings 4a bzw. dessen Aufnahme 20. Der Ringboden 8 ist unmittelbar radial in dem Halteblech 10 geführt, wodurch die Tellerfeder 12, gemäß Figur 1, entfällt.

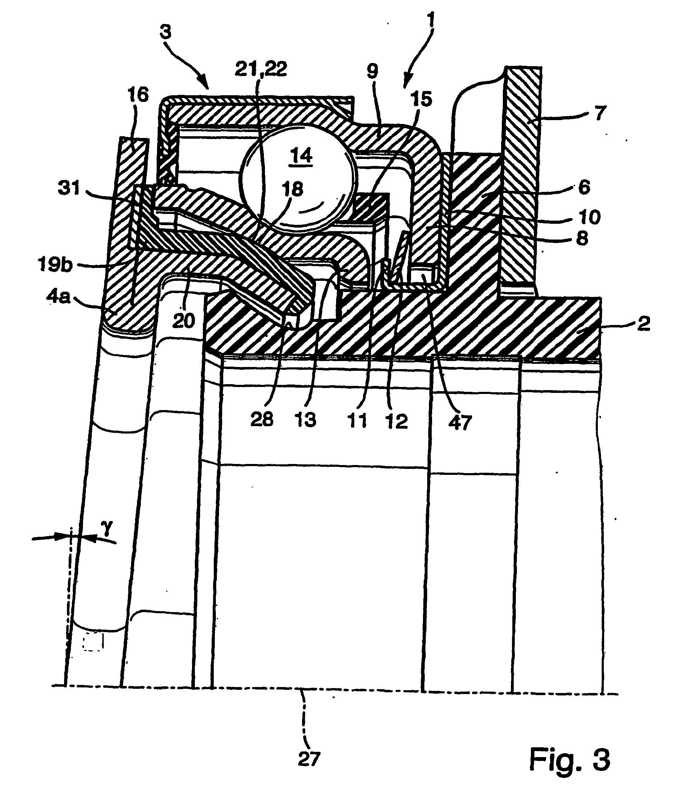

Die Figur 3 zeigt die Ausrückvorrichtung 1, deren Einstellring 4a in eine zu Figur 2 entgegengesetzte Lage verkippt ist. Dabei ist der Ringflansch 16 des Einstellrings 4a zum Ausrücklager 3 verkippt, gekennzeichnet durch den Winkel "γ". Eine unmittelbare, nachteilige Abstützung des Ringflansches 16 an dem Innenring 13 des Ausrücklagers 3 verhindert eine Schulter 31 des Gleitelementes 19b. Diese an dem Ringflansch 16 anliegende Schulter 31 erstreckt sich radial bis in eine Zone, die der stirnseitigen Kontur des Innenrings 13 entspricht.

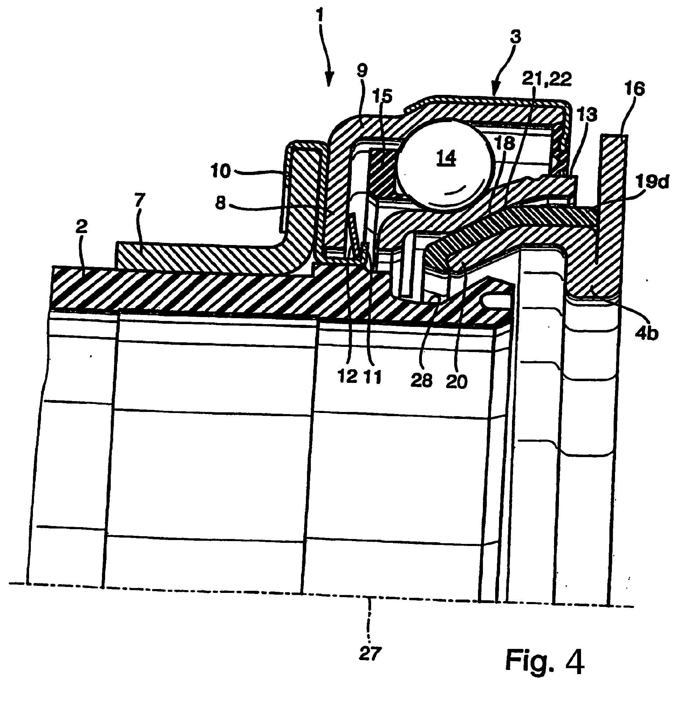

In Figur 4 ist die Ausrückvorrichtung 1 kombiniert mit dem Einstellring 4b, welcher spanlos durch ein Tiefziehverfahren hergestellt ist. Der Aufnahme 20 des Einstellrings 4b ist ein durch Spritzgießen aus Kunststoff hergestelltes Gleitelement 19d zugeordnet. Zur Fixierung des Gleitelementes 19d eignet sich eine Verbindung beispielsweise einer Verprägung. Zur Erzielung einer Verdrehsicherung kann das Gleitelement 19d beispielsweise mit Fixierzapfen, Rippen oder Nocken versehen werden, die in entsprechende Ausnehmungen der Aufnahme 20 des Einstellrings 4b eingreifen.

## Patentansprüche

1. Ausrücklager, vorzugsweise für eine in Kraftfahrzeugen eingesetzte Schalttrennkupplung, bestehend aus einem als Schrägschulterlager gestalteten Wälzlager, das einen drehstarr angeordneten Außenring (9) und einen umlaufenden, rotierenden Innenring (13) umfasst, sowie zwischen beiden Lagerringen geführte Wälzkörper (14), wobei dem Innenring (13) ein Einstellring (4a bis 4e) zugeordnet ist, an dessen Ringflansch (16, 37, 42, 45) sich eine mit der Schalttrennkupplung verbundene Tellerfeder (17) abstützt **dadurch gekennzeichnet, dass** in einer Kontaktzone, einem Abstützbereich (18) in Form von komplementären Kugelkalottensegmenten (21, 22) ein aus einem Lagerwerkstoff hergestelltes Gleitelement (19a bis 19g) eingesetzt ist, wodurch die Bauteile Einstellring (4a bis 4a) und Innenring (13) gegeneinander schwenkbar sind, zur Erzielung eines selbstjustienenden Ausrücklagers (3), und wobei an dem Innenring (13) oder auf die Aufnahme (20) des Einstellrings (4a) das Gleitelement (19a bis 19c) als Belag aufgespritzt ist, und der Innenring bzw. die Aufnahme des Einstellrings eine umlaufende Nut oder Falte aufweist, die mit dem Material des Gleitelements aufgefüllt ist.

2. Ausrücklager nach Anspruch 1, wobei das Gleitelement (19a, 19b) dem Einstellring (4a) zugeordnet ist.

3. Ausrücklager nach Anspruch 1, wobei das Gleitelement (19c) dem Innenring (13) zugeordnet bzw. befestigt ist.

4. Ausrücklager nach Anspruch 1, bei der das Gleitelement (19a) segmentförmige Aussparungen (46) in dem Abstützbereich (18) an dem Innenring (13) oder an einer Aufnahme (20) des Einstellrings (4a) aufweist.

5. Ausrücklager nach Anspruch 1, dessen Gleitelement (19c) zumindest einen Schlitz (32) aufweist.

6. Ausrücklager nach Anspruch 1, wobei das Gleitelement (19a, 19b) und der Innenring (13) bzw. der Einstellring (4a bis 4c) aus unterschiedlichen Werkstoffen hergestellt sind.

7. Ausrücklager nach Anspruch 6, wobei der Einstellring (4a bis 4c) als spanloses Ziehteil aus Stahlblech herstellbar ist.

8. Ausrücklager nach Anspruch 6, wobei der aus Stahl hergestellte Einstellring (4a bis 4c) mit einem Gleitelement (19a bis 19f) aus einem hochfesten und verschleißfesten Kunststoff kombiniert ist.

9. Ausrücklager nach Anspruch 8 bei der das Gleitelement (19a bis 19f) aus einem Thermoplast oder aus einem Duroplast hergestellt ist.

10. Ausrücklager nach Anspruch 9, wobei das Gleitelement (19a bis 19f) Zusätze aus Kohlefaser, MoS2 PTFE und Epoxidharze aufweist, die gemeinsam oder teilweise zur Erzielung einer inkorporierten Schmierung und/oder einer verbesserten Lebensdauer mit Duroplast kombiniert sind.

11. Ausrücklager nach Anspruch 6, bei der als Werkstoff für das Gleitelement (19a bis 19f) PPA vorgesehen ist, das mit Kohlefasern als Verschleißminderer und mit PTFE als Reibungsminderer versetzt ist.

12. Ausrücklager nach Anspruch 1, wobei zur Begrenzung eines Schwenkbereichs zwischen dem Innenring (13) und dem Einstellring (4a) das Gleitelement (19b) eine radial ausgerichtete, an dem Ringflansch (16) des Einstellrings (4a) anliegende Schulter (31) aufweist.

13. Ausrücklager nach Anspruch 1, versehen mit einem gebauten Einstellring (4c, 4d, 4e), bestehend aus einem der Tellerfeder (17) der Schalttrennkupplung zugeordneten Flansch (37, 42, 45), an dem das Gleitelement (19e, 19f, 19g) unmittelbar befestigt ist.

14. Ausrücklager nach Anspruch 1, versehen mit einer Verliersicherung mit der nach einer Montage bzw. Komplettierung die Bauteile Führungshülse (2), Ausrücklager (3) und Einstellring (4a) ohne Zusatzteil zusammengefügt sind, wobei in einer Einbaulage ein Endbereich der Aufnahme (20) des Einstellrings (4a) in eine Ringnut (28) des Gehäuses (2) spielbehaftet eingreift und dabei eine Außenkontur der Wandung (29) der Ringnut (28) radial überdeckt.

15. Ausrücklager nach Anspruch 1, wobei das Gleitelement (19c) einen radial nach innen gerichteten Vorsprung (33) bildet, der mit einem Abschnitt der Wandung (34) der Ringnut (28) und/oder einer dem Gehäuse (2) zugeordneten Dichtung (36) ein Labyrinth (35) bildet.

16. Ausrücklager nach Anspruch 1, wobei die Kugelkalottensegmente (21, 22) des Innenrings (13) und des Gleitelementes (19a bis 19g) unter einem Winkel ≥ 20° zu einer Symmetrieachse (27) der Ausrückvorrichtung (1) angeordnet sind.

17. Ausrücklager nach Anspruch 1, wobei das Gleitelement (19a) und der Innenring (13) bzw. die Aufnahme (20) des Einstellrings (4a) im Bereich des Abstützbereichs (18) einen Radius von ≥ 25 mm aufweisen.

18. Ausrücklager nach Anspruch 1, wobei ein Ringboden (6) des drehstarren Außenrings (9) axial auf den drehfest mit dem Gehäuse (2) verbundenen Halteblech (10) geführt ist.

## Claims

1. Release bearing, preferably for a gearshift clutch used in automotive vehicles, said release bearing comprising a rolling bearing in the form of an angular contact bearing and comprising a rotationally fixed outer ring (9) and a circulating, rotating inner ring (13), and further comprising rolling elements (14) guided between the two bearing rings, an adjusting ring (4a to 4e) being associated with the inner ring (13) and a disk spring (17) connected to the gearshift clutch being supported on an annular flange (16, 37, 42, 45) of the adjusting ring (4a to 4e), **characterised in that** a sliding element (19a to 19g) made of a material of the bearing is inserted in a contact zone, a support region (18) in the form of complementary spherical cup segments (21, 22), such that the components adjusting ring (4a to 4e) and inner ring (13) can pivot relative to each other so that a self-aligning release bearing (3) is obtained, and wherein the sliding element (19a to 19c) is injected as a coating onto the inner ring (13) or onto the reception (20) of the adjusting ring (4a), and the inner ring or the reception of the adjusting ring has a circumferential groove or fold which is filled with the material of the sliding element.

2. Release bearing according to claim 1, wherein the sliding element (19a, 19b) is associated with the adjusting ring (4a).

3. Release bearing according to claim 1, wherein the sliding element (19c) is associated with or fixed to the inner ring (13).

4. Release bearing according to claim 1, wherein the sliding element (19a) comprises segment-shaped recesses (46) in the support region (18) on the inner ring (13) or on a reception (20) of the adjusting ring (4a).

5. Release bearing according to claim 1, wherein the sliding element (19c) comprises at least one slot (32).

6. Release bearing according to claim 1, wherein the sliding element (19a, 19b) and the inner ring (13) or the adjusting ring (4a to 4c) are made of different materials.

7. Release bearing according to claim 6, wherein the adjusting ring (4a to 4c) can be made as a drawn part out of sheet steel without chip removal.

8. Release bearing according to claim 6, wherein the adjusting ring (4a to 4c) made of steel is combined with a sliding element (19a to 19f) that is made of a high-strength and wear-resistant plastics material.

9. Release bearing according to claim 8, wherein the sliding element (19a to 19f) is made of a thermoplastic or of a duroplastic.

10. Release bearing according to claim 9, wherein the sliding element (19a to 19f) comprises additions of carbon fibres, MoS₂ PTFE and epoxy resins that are combined all together or partially with duroplastic for obtaining an incorporated lubrication and/or an improved durability.

11. Release bearing according to claim 6, wherein the material provided for the sliding element (19a to 19f) is PPA that is mixed with carbon fibres as a wear reducer and with PTFE as a friction reducer.

12. Release bearing according to claim 1, wherein, for limiting a range of pivot between the inner ring (13) and the adjusting ring (4a), the sliding element (19b) comprises a radially oriented shoulder (31) that bears against the annular flange (16) of the adjusting ring (4a).

13. Release bearing according to claim 1 comprising a constructed adjusting ring (4c, 4d, 4e) that comprises a flange (37, 42, 45) that is associated with the disk spring (17) of the gearshift clutch, the sliding element (19e, 19f, 19g) being fixed directly on said flange (37, 42, 45).

14. Release bearing according to claim 1 comprising an anti-loss device through which, after assembly or completion, the components guide sleeve (2), release bearing (3) and adjusting ring (4a) are joined together without an additional part, wherein, in an installed state, an end region of the reception (20) of the adjusting ring (4a) engages with clearance into an annular groove (28) of the housing (2) and thereby covers an outer contour of the wall (29) of the annular groove (28) in radial direction.

15. Release bearing according to claim 1, wherein the sliding element (19c) forms a projection (33) that is oriented radially inwards and forms a labyrinth (35) with a section of the wall (34) of the annular groove (28) and/or with a seal (36) associated with the housing (2).

16. Release bearing according to claim 1, wherein the spherical cup segments (21, 22) of the inner ring (13) and of the sliding element (19a to 19g) are arranged at an angle of ≥ 20° to an axis of symmetry (27) of the release device (1).

17. Release bearing according to claim 1, wherein the sliding element (19a) and the inner ring (13) or the reception (20) of the adjusting ring (4a) comprise a radius of ≥ 25 mm in the region of the support region (18).

18. Release bearing according to claim 1, wherein an annular bottom (6) of the rotationally fixed outer ring (9) is guided axially on the retaining sheet (10) that is connected rotationally fixedly to the housing (2).

## Revendications

1. Butée de débrayage, de préférence pour un embrayage utilisé dans des véhicules automobiles, ladite butée de débrayage comprenant un roulement configuré sous la forme d'un palier à roulement à contact oblique qui comprend un anneau (9) extérieur qui est immobilisé en rotation et un anneau (13) intérieur périphérique et rotatif, ainsi que des corps roulants (14) qui sont guidés entre les deux anneaux du palier, un anneau (4a à 4e) d'ajustage étant associé à l'anneau (13) intérieur, un ressort Belleville (17) relié à l'embrayage étant supporté sur la bride annulaire (16, 37, 42, 45) dudit anneau (4a à 4e) d'ajustage, **caractérisé en ce que**, dans une zone de contact, c'est-à-dire, une région de support (18) configurée sous la forme de segments (21, 22) de calotte sphérique complémentaires, est inséré un élément (19a à 19g) de glissement qui est fait en un matériau de palier, de sorte que les composants anneau (4a à 4e) d'ajustage et anneau (13) intérieur peuvent être pivotés, l'un par rapport à l'autre, pour réaliser, de ce fait, une butée (3) de débrayage à alignement automatique , et où l'élément (19a à 19c) de glissement est injecté sous la forme d'une couche sur l'anneau (13) intérieur ou sur la réception (20) de l'anneau (4a) d'ajustage et l'anneau intérieur ou la réception de l'anneau d'ajustage présente une rainure périphérique ou un pli périphérique qui est rempli(e) avec le matériau de l'élément de glissement.

2. Butée de débrayage selon la revendication 1, dans laquelle l'élément (19a, 19b) de glissement est associé à l'anneau (4a) d'ajustage.

3. Butée de débrayage selon la revendication 1, dans laquelle l'élément (19c) de glissement est associé ou fixé à l'anneau (13) intérieur.

4. Butée de débrayage selon la revendication 1, dans laquelle l'élément (19a) de glissement comprend, dans la région (18) de support sur l'anneau (13) intérieur ou sur une réception (20) de l'anneau (4a) d'ajustage, des évidements (46) en forme de segments.

5. Butée de débrayage selon la revendication 1, dont l'élément (19c) de glissement comprend au moins une fente (32).

6. Butée de débrayage selon la revendication 1, dans laquelle l'élément (19a, 19b) de glissement et l'anneau (13) intérieur ou l'anneau (4a à 4c) d'ajustage sont fabriqués en des matériaux différents.

7. Butée de débrayage selon la revendication 6, dans laquelle l'anneau (4a à 4c) d'ajustage peut être fabriqué sous la forme d'une pièce en tôle d'acier emboutie sans enlèvement de copeaux.

8. Butée de débrayage selon la revendication 6, dans laquelle l'anneau (4a à 4c) d'ajustage fabriqué en acier est combiné avec un élément (19a à 19f) de glissement qui est fabriqué en une matière synthétique anti-usure à haute résistance mécanique.

9. Butée de débrayage selon la revendication 8, dans laquelle l'élément (19a à 19f) de glissement est fabriqué en un thermoplastique ou en une résine thermodurcissable.

10. Butée de débrayage selon la revendication 9, dans laquelle l'élément (19a à 19f) de glissement comprend des additifs de fibres de carbone, de MoS₂, de PTFE et de résines époxy qui sont combinés tous ensembles ou partiellement avec de la résine thermodurcissable afin de réaliser une lubrification incorporée et/ou une longévité améliorée.

11. Butée de débrayage selon la revendication 6, dans laquelle du PPA, mélangé avec des fibres de carbone pour réduire l'usure et avec du PTFE pour réduire le frottement, est prévu en tant que matériau pour l'élément (19a à 19f) de glissement.

12. Butée de débrayage selon la revendication 1, dans laquelle, pour limiter une gamme de pivotement entre l'anneau (13) intérieur et l'anneau (4a) d'ajustage, l'élément (19b) de glissement comprend une épaule (31) orientée en direction radiale qui s'appuie contre la bride annulaire (16) de l'anneau (4a) d'ajustage.

13. Butée de débrayage selon la revendication 1 munie d'un anneau (4c, 4d, 4e) d'ajustage assemblé qui comprend une bride (37, 42, 45) qui est associée au ressort Belleville (17) de l'embrayage et à laquelle est fixé directement l'élément (19e, 19f, 19g) de glissement.

14. Butée de débrayage selon la revendication 1 munie d'un dispositif antiperte grâce auquel, après assemblage ou achèvement, les composants douille de guidage (2), butée de débrayage (3) et anneau (4a) d'ajustage sont réunis, l'un à l'autre, sans pièce additionnelle, et dans une position de montage de laquelle butée, une région d'extrémité de la réception (20) de l'anneau (4a) d'ajustage s'engage avec jeu dans une rainure annulaire (28) du boîtier (2) en recouvrant, de ce fait, un contour extérieur de la paroi (29) de la rainure annulaire (28) en direction radiale.

15. Butée de débrayage selon la revendication 1, dans laquelle l'élément (19c) de glissement forme une saillie (33) qui est orientée radialement vers l'intérieur et qui forme, conjointement avec une section de la paroi (34) de la rainure annulaire (28) et/ou avec une garniture (36) associée au boîtier (2), un labyrinthe (35).

16. Butée de débrayage selon la revendication 1, dans laquelle les segments (21, 22) de calotte sphérique de l'anneau (13) intérieur et de l'élément (19a à 19g) de glissement sont agencés selon un angle de ≥ 20° à un axe de symétrie (27) du dispositif de débrayage (1).

17. Butée de débrayage selon la revendication 1, dans laquelle l'élément (19a) de glissement et l'anneau (13) intérieur ou la réception (20) de l'anneau (4a) d'ajustage possèdent, dans la région de la région (18) de support, un rayon de ≥ 25 mm.

18. Butée de débrayage selon la revendication 1, dans laquelle un fond annulaire (6) de l'anneau (9) extérieur qui est immobilisé en rotation est guidé en direction axiale sur la tôle de retenue (10) qui est solidaire en rotation avec le boîtier (2).
